(19) Europäisches Patentamt
European Patent Office
Office européen des brevets

(11) **EP 2 955 481 B1**

(12) **FASCICULE DE BREVET EUROPEEN**

(45) Date de publication et mention de la délivrance du brevet:
**13.09.2017 Bulletin 2017/37**

(21) Numéro de dépôt: **15171559.6**

(22) Date de dépôt: **11.06.2015**

(51) Int Cl.:
*G01C 21/00* *(2006.01)*    *G01C 23/00* *(2006.01)*
*G01S 13/95* *(2006.01)*    *G08G 5/00* *(2006.01)*
*G01S 7/24* *(2006.01)*    *G01W 1/10* *(2006.01)*

(54) **MÉTHODE ET SYSTÈME EMBARQUÉ DE VISUALISATION DE RISQUES MÉTÉOROLOGIQUES**

METHODE UND BORDSYSTEM ZUR ANZEIGE VON METEOROLOGISCHEN GEFAHREN

METHOD AND ON-BOARD SYSTEM FOR VIEWING WEATHER RISKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.06.2014 FR 1455336**

(43) Date de publication de la demande:
**16.12.2015 Bulletin 2015/51**

(73) Titulaire: **GTD Sistemas de Informacion**
**08005 Barcelona (ES)**

(72) Inventeurs:
• **Bas Gago, Isidro**
**08291 RIPOLLET (ES)**
• **Dominguez Armesto, Oscar**
**08192 SANT QUIRZE DEL VALLES (ES)**

(74) Mandataire: **Brevalex**
**56, Boulevard de l'Embouchure**
**B.P. 27519**
**31075 Toulouse Cedex 2 (FR)**

(56) Documents cités:
FR-A1- 2 923 008    US-A1- 2004 044 445
US-B1- 6 577 947    US-B1- 6 744 382

EP 2 955 481 B1

## Description

## DOMAINE TECHNIQUE

La présente invention concerne de manière générale le domaine de la surveillance météorologique et plus particulièrement celui de la visualisation de risques météorologiques à bord d'un véhicule tel qu'un aéronef.

## ÉTAT DE LA TECHNIQUE ANTÉRIEURE

Les conditions météorologiques peuvent sévèrement affecter la sécurité d'un aéronef au cours de sa phase de vol ou de ses phases de décollage et d'approche. En particulier, les phénomènes orageux souvent associés à des turbulences dans l'atmosphère et à de fortes précipitations de pluie ou de grêle, peuvent imposer des modifications d'itinéraire. Ces modifications se traduisent par une charge de travail accrue pour les contrôleurs aériens et les pilotes. L'espace aérien disponible s'en trouve réduit, ce qui impose de mettre certains vols en attente. Il en résulte fréquemment des retards, des coûts d'exploitation supplémentaires (quantité de carburant consommée) et une dégradation générale de la qualité de service. En outre, les itinéraires des aéronefs sont quelquefois inutilement modifiés dans la mesure où les mauvaises conditions météorologiques auraient disparu ou se seraient éloignées si l'aéronef avait continué sa trajectoire initiale.

Dans un aéronef, la surveillance des risques météorologiques est généralement réalisée à l'aide d'un radar météorologique embarqué dans la pointe. Il utilise de manière conventionnelle une antenne mobile selon deux axes de manière à pouvoir effectuer un balayage mécanique du faisceau radar selon une large plage angulaire en azimut et pour des valeurs angulaires discrètes en élévation. Ces radars météorologiques permettent de représenter en temps réel les conditions météorologiques à l'avant de l'aéronef dans un secteur angulaire d'environ 160° et avec une portée de l'ordre de 320 NM (miles nautiques). Lorsque le risque météorologique est situé à faible distance (par exemple à moins de 120 NM), le pilote n'a que peu de temps pour l'anticiper et engager une manoeuvre d'évitement. Il est par conséquent nécessaire de pouvoir anticiper dès que possible ces manoeuvres d'évitement.

Il a été proposé dans le brevet US-B-7109913 de fusionner des informations météorologiques obtenues par réflectométrie radar avec des mesures de pression et température prises à bord de l'aéronef ainsi que des informations météorologiques satellitaires retransmises par des stations au sol. Bien que ce système permette d'améliorer une appréciation instantanée des risques météorologiques dans une zone donnée, il ne permet toutefois pas d'anticiper aisément l'évolution de ces risques pour l'aéronef.

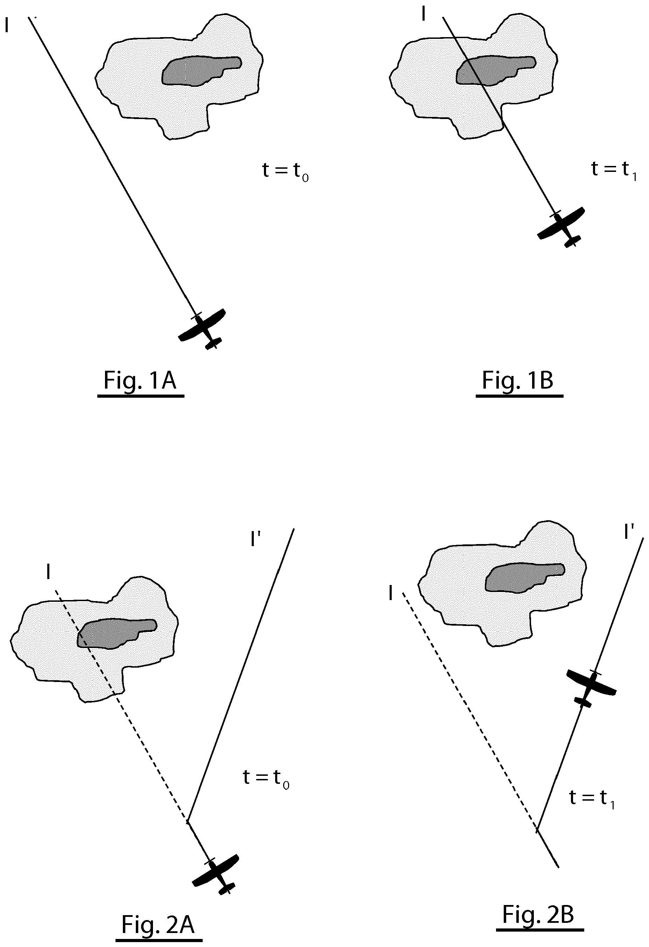

Par ailleurs, en règle générale, le pilote dispose avant de partir de prévisions météorologiques sous forme de cartes. Il peut recevoir ultérieurement des alertes sur l'évolution des conditions météorologiques au moyen de messages transmis par le sol, notamment par les centres de contrôle aérien de la compagnie aérienne AOC (*Airline Operational Control*) ou du trafic aérien ATC (*Air Traffic Control*). Ces messages ne donnent cependant qu'une information imprécise sur la localisation, l'étendue et l'évolution des risques. Le pilote se voit fréquemment contraint de suivre un itinéraire alternatif à celui initialement prévu sans avoir de vision d'ensemble précise des risques météorologiques réellement encourus. La demande internationale WO-A-2013/130897 décrit une méthode de rationalisation des échanges d'informations météorologiques entre pilotes, contrôleurs aériens et compagnies aériennes pour représenter plus précisément des risques de turbulence. Toutefois, cette méthode ne permet pas au pilote d'apprécier et d'anticiper les risques le long de sa trajectoire, comme le montrent les Figs. 1A-1B et 2A-2B.

Les Figs. 1A et 1B représentent un premier exemple de conditions météorologiques dans une zone donnée à l'avant de l'aéronef, respectivement en un premier temps donné, $t_0$, et un second temps donné, $t_1$, postérieur à $t_0$. On a désigné par *Cb* une formation orageuse (cumulonimbus) se développant dans cette zone. On remarque que celle-ci s'est déplacée entre les instants $t_0$ et $t_1$, de sorte que si elle ne présentait pas un risque pour l'aéronef *A* se déplaçant le long de son itinéraire *R* à l'instant $t_0$, elle représente un risque réel à l'instant $t_1$.

Les Figs. 2A et 2B représentent un second exemple de conditions météorologiques dans la zone en question, avec les mêmes conventions de notation que précédemment.

Dans cet exemple, le pilote a modifié son itinéraire *I* en *I'* en raison de la présence du risque créé par *Cb* sur son itinéraire, identifié à l'instant $t_0$. Toutefois, on s'aperçoit que cette manoeuvre d'évitement était inutile puisqu'à l'instant $t_1$, le risque créé par *Cb* ne menace plus la trajectoire initialement choisie. Le document US 6 577 947 B1 divulgue un système de visualisation de risques météorologiques dans une zone prédéterminée, embarqué dans un aéronef et comprenant des moyens de communication pour recevoir des informations météorologiques en chaque point de ladite zone, un processeur pour déterminer, pour chaque point de ladite zone, à partir de la position actuelle de l'aéronef et des paramètres de navigation dudit aéronef un instant futur auquel l'aéronef atteindrait ce point et un système expert utilisant un réseau bayésien représentant un modèle probabiliste pour estimer, en chaque point de ladite zone, à partir desdites informations météorologiques, un risque météorologique en ce point au dit instant futur, afin de fournir une visualisation du risque estimé sur une interface graphique. Le but de la présente invention est par conséquent de proposer une méthode et un système embarqué de visualisation de risques météorologiques qui permettent au pilote d'anticiper et d'estimer l'évolution de ces risques de manière claire et fiable, et dans le cas où cela s'avère nécessaire, de modifier son itinéraire suffisamment tôt pour ne pas rencontrer les risques en question.

## EXPOSÉ DE L'INVENTION

La présente invention est relative à un système et une méthode de visualisation de risques météorologiques tels que définis dans les revendications indépendantes ci-après. Des modes de réalisation avantageux sont donnés dans les revendications dépendantes.

## BRÈVE DESCRIPTION DES DESSINS

D'autres caractéristiques et avantages de l'invention apparaîtront à la lecture d'un mode de réalisation préférentiel de l'invention décrit en référence aux figures jointes parmi lesquelles :

Les Figs. 1A et 1B représentent un premier exemple de conditions météorologiques dans une zone donnée, respectivement en un premier et un second instants ;
Les Figs. 2A et 2B représentent un second exemple de conditions météorologiques dans une zone donnée, respectivement en un premier et un second instants ;
La Fig. 3 représente de manière schématique un système de visualisation de risques météorologiques selon un mode de réalisation de l'invention ;
Les Figs. 4A et 4B représentent deux exemples de zones de visualisation de risques météorologiques pour le système de la Fig. 3;
La Fig. 5A représente un premier exemple, selon l'invention, de réseau bayésien pour le système expert de la Fig. 3 ;
La Fig. 5B représente une situation météorologique dans laquelle le réseau bayésien de la Fig. 5A peut opérer;
Les Figs. 5C et 5D représentent des situations météorologiques permettant l'apprentissage du réseau bayésien de la Fig. 5A;
La Fig. 6A représente un second exemple de réseau bayésien pour le système expert de la Fig. 3 ;
La Fig. 6B représente une situation météorologique dans laquelle le réseau bayésien de la Fig. 6A peut opérer;
La Fig. 7 représente sous forme d'ordinogramme une méthode de visualisation de risques météorologiques selon un premier mode de fonctionnement de l'invention ;
La Fig. 8 représente un exemple d'écran sur lequel ont été visualisés des risques météorologiques selon la méthode de visualisation de la Fig. 7 ;
La Fig. 9 représente sous forme d'ordinogramme une méthode de visualisation de conditions météorologiques selon un second mode de fonctionnement du système de la Fig. 3 ;

Les Fig. 10A et 10B représentent une fenêtre de l'interface graphique affichant les conditions météorologiques d'une zone donnée en un instant actuel et en instant futur, au moyen de la méthode de la Fig. 9.

## EXPOSÉ DÉTAILLÉ DE MODES DE RÉALISATION PARTICULIERS

Dans la suite de l'exposé, nous considérerons un système de visualisation de risques météorologiques embarqué à bord d'un aéronef. Toutefois, l'homme du métier comprendra que l'invention est susceptible de s'appliquer également à d'autres types de véhicule tel qu'un bateau par exemple. Ce système de visualisation de risques météorologiques peut être avantageusement utilisé comme système d'aide à la navigation dans la mesure où le pilote du véhicule peut modifier son itinéraire de manière à éviter les risques en question.

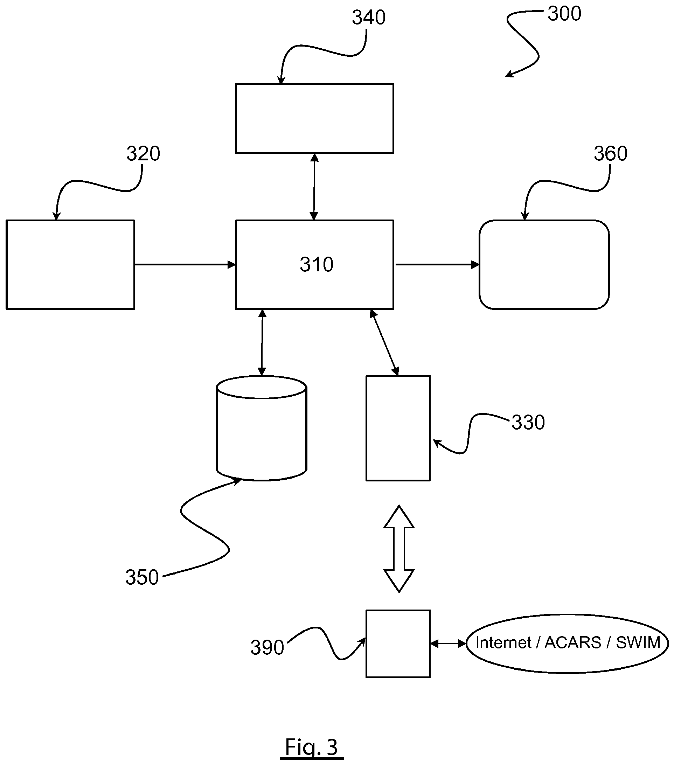

La Fig. 3 représente un système embarqué de visualisation de risques météorologiques, 300.
Ce système comprend un processeur, 310, couplé avec un système de navigation, 320, des moyens de communication 340, un système expert, 340, ainsi qu'avec une mémoire de masse 350 et une interface graphique (GUI), 360.
Le système de navigation, 320, est adapté à fournir en chaque instant au processeur, 310, la position actuelle de l'aéronef ainsi que ses principaux paramètres de navigation, notamment sa vitesse, sa direction et le cas échéant, son itinéraire, donné par exemple au moyen de points de cheminement (*waypoints*).
Les moyens de communication, 330, permettent de recevoir, via la liaison montante, des informations météorologiques. Ces informations météorologiques sont par exemple collectées et transmises par une station au sol, 390, reliée au réseau de communication ACARS, au réseau internet ou au réseau SWIM (*System Wide Information Management*) développé dans le cadre Européen de SESAR (*Single European Sky ATM Research*) et dans le cadre américain NextGen (*Next Generation Air Transportation System.* Les informations météorologiques peuvent être fournies par des distributeurs de données météo (*Weather data providers*), eux-mêmes traitant des données transmises par des stations d'observation météo au sol ou des satellites météorologiques (par exemple des satellites METEOSAT). Connaissant la position de l'aéronef, le processeur 310, peut sélectivement télécharger via la liaison montante les informations météorologiques dans une zone d'intérêt. Ces informations peuvent être relatives à des conditions météorologiques observées ou prédites. Par conditions météorologiques on entend notamment la présence d'orages, de turbulences, de givrage, voire de cendres volcaniques, des phénomènes de convection ou de vent, des vitesses de vent, des degrés de précipitation, des types de précipitation (pluie, grêle), des hauteur et épaisseur de couches nuageuses, types de nuages (notamment cumulonimbus), cette liste n'étant bien entendu en aucune façon exhaustive. Les conditions météorologiques peuvent être de nature à créer des risques météorologiques aux aéronefs. On dénommera risque météorologique un risque encouru par l'aéronef (ou ses passagers) en raison de la présence de conditions météorologiques en un lieu donné. On comprend en effet que seules certaines conditions météorologiques au lieu ou à proximité du lieu où se trouve l'aéronef sont de nature à lui faire courir un risque justifiant une manoeuvre d'évitement.

Les informations météorologiques observées et/ou prédites (*nowcast* ou *forecast*) dans une zone donnée sont stockées par le processeur dans la mémoire de masse 350. Les informations météorologiques sont indexées par des coordonnées spatiales (de préférence en trois dimensions) et une variable temporelle. En d'autres termes, la mémoire de masse contient une base de données météorologiques spatio-temporelles. Pour un type de conditions météorologiques donné, lorsque des données observées ou prédites plus récentes sont disponibles, elles écrasent les données plus anciennes.

L'estimation des risques météorologiques pour l'aéronef est effectuée par le système expert à partir, d'une part, des informations météorologiques, stockées dans la mémoire de masse, et, d'autre part, de la position et des paramètres de navigation de l'aéronef (notamment sa vitesse, sa direction et, le cas échéant, son itinéraire), fournis par le processeur, 310.

Le système expert, 340, estime en chaque point d'une zone prédéterminée ou d'une zone sélectionnée par le pilote, le niveau de risque météorologique encouru par l'aéronef. Plus précisément, le processeur 310 détermine pour chaque point donné de cette zone, l'instant futur auquel le point pourrait être atteint compte tenu de la position actuelle et des paramètres de navigation de l'aéronef. Le système expert estime alors le risque météorologique qu'encourrait l'aéronef s'il se trouvait en ce point audit instant futur. Il est essentiel de noter que le risque estimé n'est pas celui qu'encourrait l'aéronef s'il se trouvait au point considéré à l'instant présent mais bien celui qu'encourrait l'aéronef en ce point au moment où il l'atteindrait. Ainsi, l'estimation du risque prend en compte l'évolution des conditions météorologiques pendant le temps de déplacement de l'aéronef. L'estimation du risque météorologique est réalisée à l'aide d'un modèle probabiliste comme décrit plus loin.

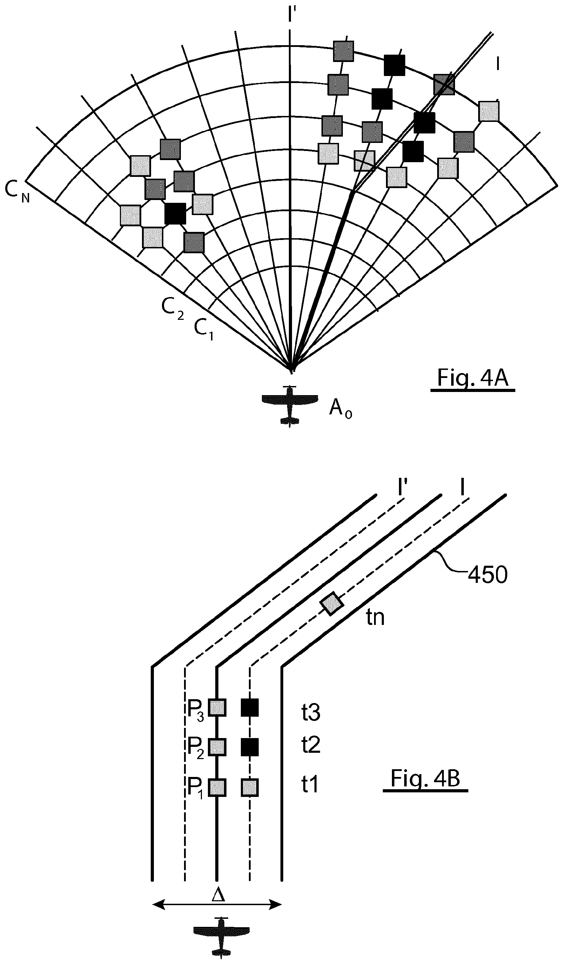

Les Figs. 4A et 4B représentent une estimation des risques météorologiques pour deux exemples de zones, à l'avant d'un aéronef.

Dans le cas de la Fig. 4A, l'estimation des risques météorologiques est effectuée pour l'intégralité d'un secteur dont le sommet est sensiblement centré sur la position de l'aéronef, sans hypothèse d'une trajectoire particulière. Le secteur est supposé être situé dans le plan horizontal de l'aéronef. Alternativement, une autre altitude pourrait être considérée, moyennant la prise en compte du temps nécessaire au changement d'altitude (ce qui sera le notamment le cas dans le cas d'une tentative d'évitement vertical). Le secteur est généralement situé dans le demi-plan à l'avant de l'aéronef (plage angulaire inférieure à 180°). Toutefois un secteur de plage angulaire supérieure peut être envisagé.

Sur la Fig. 4A, l'aéronef occupe une position actuelle, notée $A_0$, en un instant actuel $t_0$. Compte tenu de sa vitesse $V$ l'aéronef peut atteindre les cercles concentriques $C_1, C_2,...,C_N$ aux instants $t_1,t_2,...,t_N$. Bien entendu, les différents points d'un même cercle peuvent être atteints moyennant un changement de cap de l'aéronef. On a simplement considéré ici que le temps nécessaire au changement de cap était négligeable par rapport à $\delta t = t_1 - t_0$. De manière générale, on comprendra que les points que l'aéronef peut rallier après un intervalle de temps $\delta t$ sont situés sur une nappe dans l'espace tridimensionnel, cette nappe n'étant pas nécessairement sphérique en raison des temps nécessaires au changement de cap et d'altitude. Le système expert procédera avantageusement de nappe en nappe, de manière à traiter séquentiellement tous les points correspondants à un même décalage temporel $\delta t$. Ainsi, dans le cas de la Fig. 4A, les points de la zone sectorielle sont traités selon des cercles concentriques successifs. Pour un cercle $C_n$, le système expert extrait de la mémoire de masse les conditions météorologiques prédites pour le temps $t_n$ correspondant et estime le risque météorologique en chacun des points de ce cercle. Alternativement, le système expert extrait de la mémoire de masse les conditions météorologiques actuelles (observées ou prédites) et une prédiction de leur évolution pour évaluer le risque en chaque point du cercle.

Le risque peut être représenté selon une échelle d'intensité de niveaux de gris ou une échelle de couleurs. Dans le cas de la Fig. 4A, le risque maximum est représenté sous forme de niveaux de gris. On voit ainsi, dans le cas présent, que l'aéronef doit modifier son itinéraire *I* pour ne pas encourir un risque météorologique maximum. Il peut par exemple choisir l'itinéraire *I'* pour éviter le risque en question.

Dans le cas de la Fig. 4B l'estimation des risques météorologiques est effectuée pour un itinéraire prédéterminé *I* de l'aéronef, ou pour un couloir relativement étroit, de largeur $\Delta$ de part et d'autre de cette trajectoire. La largeur du couloir peut être choisie par le pilote, par exemple en effectuant une sélection parmi un ensemble de largeurs prédéterminée ou simplement en déplaçant les bords du couloir, 450, à l'aide du pointeur d'une souris. En tout état de cause, le processeur détermine alors les instants $t_1,...,t_N$ auxquels l'aéronef attendrait respectivement les points $P_1,..., P_N$ de la trajectoire *I*, compte tenu de son plan de vol. De même que précédemment, le système expert extrait de la mémoire de masse les conditions météorologiques prédites pour les temps $t_1,...,t_N$ et en déduit le risque météorologique aux points considérés. Alternativement, il pourra extraire de la mémoire de masse les conditions météorologiques actuelles aux points considérés et une prévision de leur évolution. Dans le cas illustré, la trajectoire *I'* représente une bonne alternative pour éviter les risques.

Cette variante présente l'avantage de nécessiter moins de calcul et permet de valider simplement une trajectoire. Si un risque météorologique est présent sur cette trajectoire, le pilote peut opter pour la première variante et obtenir alors une cartographie des risques sur la totalité de la zone souhaitée. Réciproquement, après avoir choisi un itinéraire à l'aide de la première variante, le pilote peut ensuite se contenter de visualiser les risques le long de l'itinéraire choisi.

Le système expert estime à partir de la position actuelle de l'aéronef, d'une position possible de celui-ci en un instant futur dans la zone considérée et des conditions météorologiques prédites pour cet instant, un niveau de risque météorologique. Pour ce faire, le système expert utilise un modèle probabiliste du risque météorologique. Ce modèle probabiliste est représenté par un réseau bayésien. On pourra trouver une introduction aux réseaux bayésiens dans l'article de T.A. Stephenson intitulé « *An introduction to bayesian network theory and usage* », IDIAP Research Report, Feb. 2000.

On rappelle qu'un réseau bayésien est un graphe orienté acyclique dont les noeuds représentent des variables aléatoires (généralement discrètes) et dont les arcs représentent les relations causales. Un arc $E$ entre un noeud de départ (variable aléatoire) $u$ et noeud d'arrivée (variable aléatoire) $v$ est affecté d'un poids représentant la probabilité conditionnelle $P(v|u)$. Ainsi, si un noeud $v$ a pour parents une pluralité de noeuds $u_1,...,u_N$, autrement dit si la variable aléatoire $v$ est conditionnellement dépendante des variables aléatoires $u_1,...,u_N$, on a :

$$P(\mathrm{v}) = \prod_{k=1}^{N} P\left(v \middle| u_k\right)$$

Les poids des arcs, c'est-à-dire les probabilités conditionnelles entre variables aléatoires sont obtenues au moyen d'une phase d'apprentissage.

En absence de connaissance *a priori* de la structure du graphe, on pourra commencer l'apprentissage avec un nombre élevé de variables aléatoires et simplifier le graphe par suppression d'arcs. Par exemple, les arcs dont les poids sont inférieurs à une valeur de seuil pourront être supprimés.

Le réseau bayésien (et plus généralement le modèle probabiliste) pourra être fonction de la région survolée. On conçoit en effet que les risques puissent être différents dans une région tropicale et une région tempérée. Il pourra également dépendre du type d'aéronef, certains aéronefs pouvant être plus sujets à certaines conditions météorologiques que d'autres. Il pourra encore dépendre de la phase de vol dans laquelle se trouve l'aéronef. D'autres paramètres du réseau bayésien pourront être considérés par l'homme du métier.

Un exemple type de risque météorologique pour un aéronef est celui de rencontrer un cumulonimbus sur sa trajectoire. En effet, ce type de nuage peut être le siège de manifestations électriques violentes comme la foudre mais aussi de chutes de grêle, de fortes précipitations, de givrage et de forts cisaillements de vent. Le principal danger des cumulonimbus provient généralement des rafales descendantes (notamment en phase d'approche) et des fortes turbulences qui peuvent avoir lieu dans les hautes couches du nuage. La présence de cumulonimbus pourra être détectée par une station de prévision au sol en rapprochant des observations météo satellitaires, relatives aux couches supérieures de l'atmosphère et des observations météo au sol. Alternativement, la présence de ces cumulonimbus pourra être détectée par le système embarqué sur la base de ces mêmes observations, après que celles-ci aient été transmises à l'aéronef sur la voie montante.

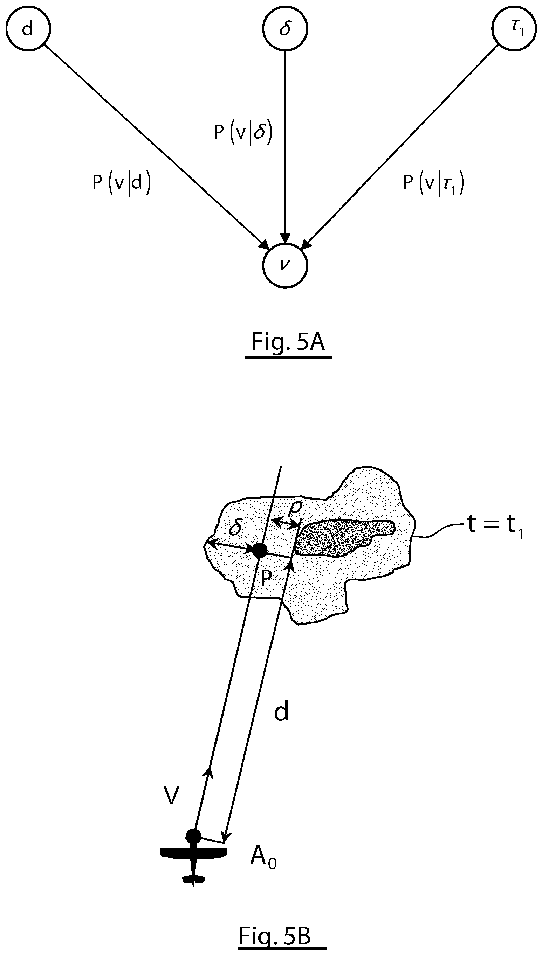

La Fig. 5A représente un premier exemple, selon l'invention, de réseau bayésien évaluant un risque météorologique relatif à la rencontre d'un cumulonimbus.

On suppose que l'on connaît la position actuelle $A_0$ de l'aéronef et les prévisions des conditions météorologiques pour le temps $t_1 = t_0 + d/V$ où $t_0$ désigne l'instant actuel, $d$ est la distance entre la position actuelle $A$ de l'aéronef et le point $P$ de la zone où l'on souhaite estimer le risque météorologique, et $V$ est la vitesse de l'aéronef.

On a représenté en Fig. 5B la situation relative de l'aéronef et du cumulonimbus. La position et l'extension du cumulonimbus représenté ici sont celles relatives au temps $t_1$, c'est-à-dire pour l'instant où l'aéronef atteint le point $P$.

La zone en gris foncé située à l'intérieur du cumulonimbus Cb est celle présentant un fort niveau de précipitation. Cette zone peut être détectée au moyen de mesures de réflectométrie radar (coefficient de réflexion radar supérieur à un seuil prédéterminé par exemple). On a noté $\delta$ la distance entre la droite (AP) et la frontière du cumulonimbus et $\rho$ la distance de la droite (AP) à la zone de fort niveau de précipitation.

Le réseau bayésien de la Fig. 5A fait intervenir ici les distances $d$ et $\delta$ ainsi que l'ancienneté de la prédiction $\tau_1 = t_1 - t_\omega$ où $t_\omega$ est l'instant auquel la prédiction a été réalisée. Le cas échéant d'autres variables aléatoires peuvent prises en compte, telles que la distance $\rho$ définie plus haut, la direction de déplacement du cumulonimbus ou son déplacement (fournis par la station de prévision météo). Le degré de confiance $\eta$ de la prédiction météorologique (par exemple sous la forme d'un écart type) ainsi que le degré de sévérité du risque peuvent également être des paramètres pris en considération par le réseau bayésien. En pratique, les variables aléatoires continues intervenant dans la prédiction, telles que par exemple les distances $d$ et $\delta$ sont discrétisées (par intégration de leur densité de probabilité sur les pas de quantification) de manière à toujours se ramener à des variables aléatoires discrètes.

Comme indiqué plus haut, les probabilités conditionnelles relatives aux différents arcs du graphe sont obtenues au cours d'une phase d'apprentissage.

Lorsque la base de données est complète, la phase d'apprentissage peut consister à comparer, au moyen d'une base de données météorologiques, des situations prédites avec celles réellement observées. En revanche, si la base de données n'est pas complète, la méthode dite EM (expectation-maximization) peut être utilisée pour obtenir les probabilités conditionnelles du réseau bayésien, de manière connue en soi.

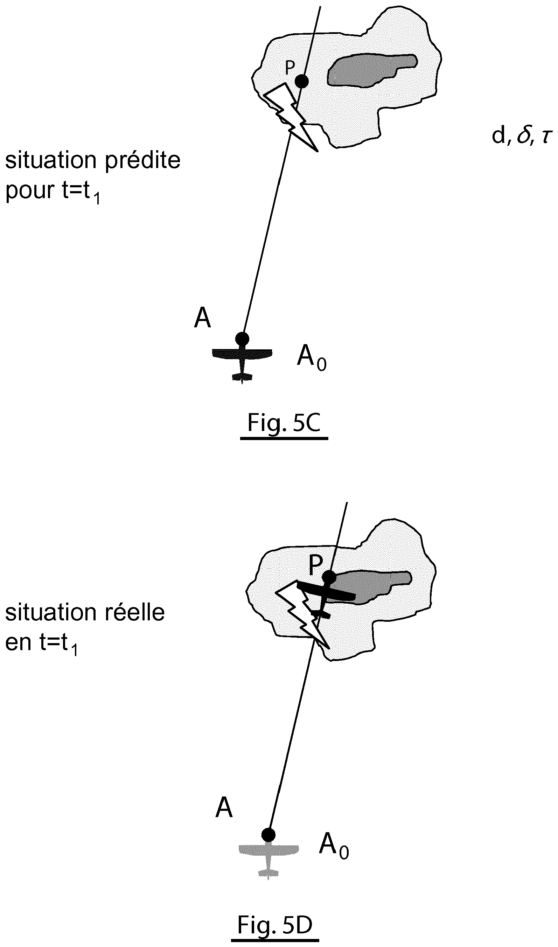

La Fig. 5C illustre une situation prédite en un point d'intérêt $P$ situé à la distance $d$ d'un aéronef à la position actuelle $A_0$. L'ancienneté de prédiction est $\tau_1$ et la distance à la frontière du cumulonimbus dans la situation prédite au temps $t_1$ est $\delta$.

On compare cette situation prédite à l'instant $t_\omega$ avec celle qui a été réellement observée au temps $t_1$, représentée en Fig. 5D. On voit dans ce cas que la prédiction était correcte puisque la trajectoire de l'aéronef traverse effectivement le cumulonimbus. Pour chaque prédiction correcte on affecte un score donné, et pour chaque prédiction erronée on affecte un score nul. Les probabilités conditionnelles sont obtenues en réalisant une moyenne des scores obtenus sur un grand nombre de situations prédites caractérisées par des triplets $(d, \delta, \tau)$.

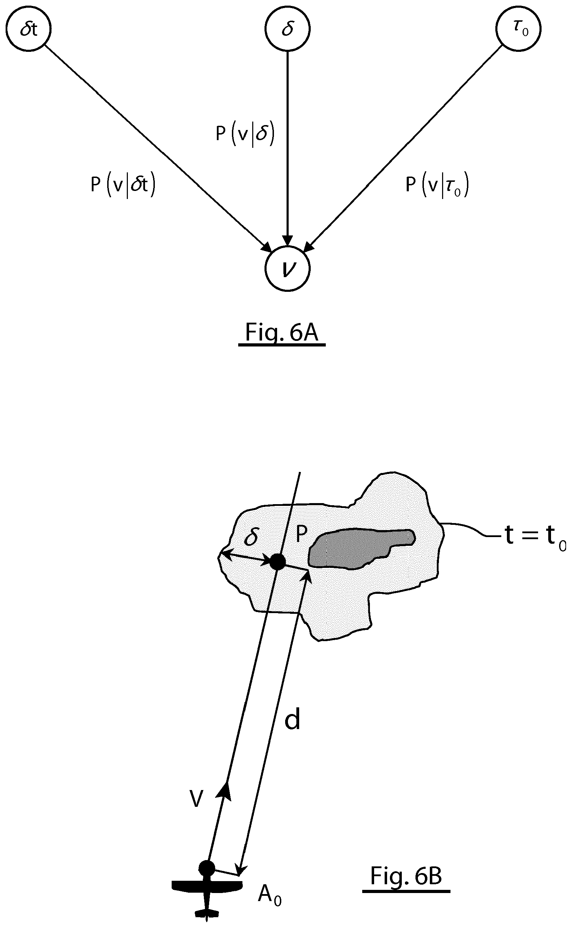

La Fig. 6A représente un second exemple de réseau bayésien évaluant un risque météorologique relatif à la rencontre d'un cumulonimbus.

Ce réseau bayésien se distingue du précédent en ce que la base du calcul probabiliste n'est pas la situation météorologique prédite pour l'instant $t_1$ où l'aéronef arrive au point $P$ mais celle observée à l'instant actuel $t_0$ (ou qui avait été prédite pour cet instant).

La Fig. 6B représente la situation relative de l'aéronef et du cumulonimbus. On notera que la position et l'extension du cumulonimbus représenté ici sont bien celles relatives au temps $t_0$.

Les variables aléatoires, c'est-à-dire les noeuds du graphe de la Fig. 6A, sont ici le temps $\delta t = d/V$ nécessaire à l'aéronef pour parcourir la distance $AP$ jusqu'au point d'intérêt, la distance $\delta$ de la droite $(AP)$ à la frontière du cumulonimbus, la vitesse et la direction du cumulonimbus, le type d'évolution du cumulonimbus (croissant, décroissant), l'ancienneté de la prédiction $\tau_0 = t_0 - t_\omega$. Là-encore, d'autres variables aléatoires pourront être prises en considération, ainsi que le degré de confiance (*confidence level*) $\eta$ de la prédiction. Les variables aléatoires continues seront en pratique discrétisées. Par exemple la distance $\delta$ pourra être discrétisée sous la forme (centre, périphérique, extérieur) pour traduire le fait que la trajectoire coupe le cumulonimbus en son centre, à sa périphérie, ou ne le coupe pas. De manière similaire, la direction du cumulonimbus pourra être discrétisée en huit valeurs N, NE, E, SE, S, SO, O, NO.

**[0044]** L'apprentissage du réseau bayésien peut se faire comme précédemment à partir de la méthode de vraisemblance lorsque la base de données est complète ou à partir de la méthode EM lorsqu'elle ne l'est pas.

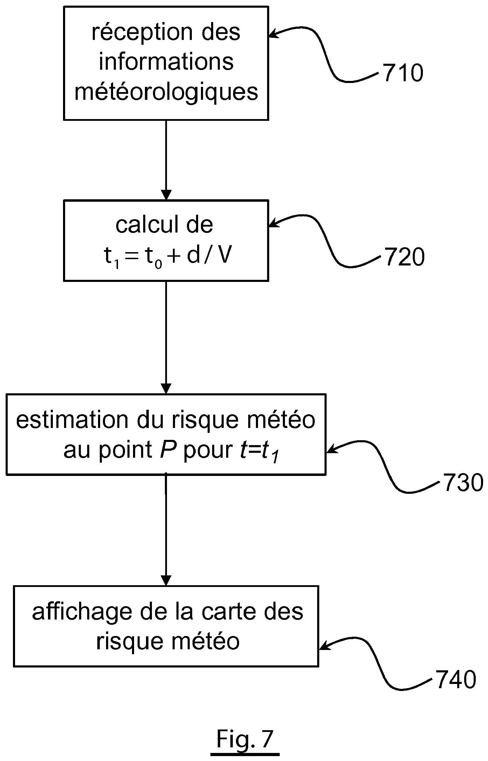

La Fig. 7 représente sous forme d'ordinogramme une méthode de visualisation de risques météorologiques selon un premier mode de fonctionnement de l'invention.

Cette méthode est mise en oeuvre pour visualiser les risques météorologiques encouru par un véhicule dans une zone prédéterminée, typiquement dans un secteur angulaire dont le sommet est situé à la position du véhicule.

Dans une première étape, 710, on reçoit des informations météorologiques pour chaque point de ladite zone. Ces informations météorologiques peuvent être relatives à une situation météorologique observée ou une situation météorologique prédite pour le point considéré.

Dans une seconde étape, 720, on détermine à partir de la position actuelle du véhicule et pour chaque point de la zone considérée, le temps nécessaire au véhicule pour rallier ce point à partir de sa position actuelle, autrement dit l'instant futur auquel il rallierait ce point, compte tenu de ses paramètres de navigation.

Dans une troisième étape, 730, on estime pour chaque point de la zone considérée, à partir des informations météorologiques en ce point et de l'instant futur correspondant, le risque météorologique encouru par le véhicule en ce point et à l'instant futur. L'estimation est obtenue au moyen d'un modèle probabiliste, mis en oeuvre par un système expert utilisant un réseau bayésien comme décrit précédemment.

Dans une quatrième étape, 740, on représente une cartographie des risques météorologiques dans la zone considérée. A partir de cette cartographie, le pilote du véhicule peut alors décider, avec un degré de fiabilité élevé, si son itinéraire prévu présente un risque météorologique et, dans l'affirmative, rechercher un itinéraire alternatif ne présentant pas le risque en question. Cette méthode est avantageuse dans la mesure où le risque représenté en chaque point de la zone n'est pas le risque actuel mais bien celui encouru par le véhicule lorsqu'il ralliera ce point. La cartographie des risques est par conséquent directement interprétable pour le pilote.

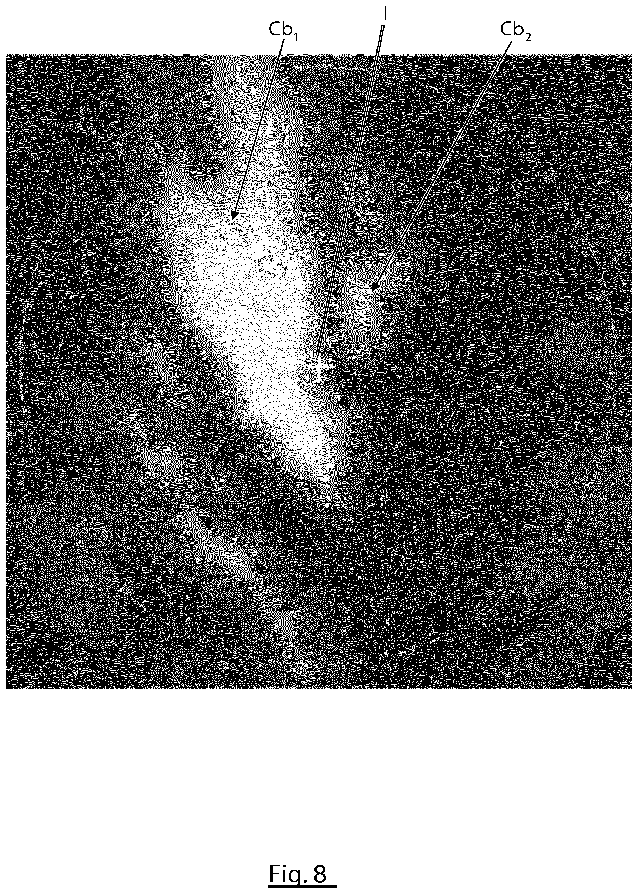

La Fig. 8 donne un exemple de cartographie de risques météorologiques obtenue par la méthode de visualisation selon l'invention.

Le risque représenté ici est celui de rencontrer une situation orageuse. La position actuelle de l'aéronef est située au centre de la figure. Le niveau de gris d'un pixel est proportionnel au niveau de risque. On remarquera que l'itinéraire $I$ peut être validé en dépit de la situation orageuse actuelle en $Cb_1$ et $Cb_2$, car les orages se seront dissipés avant que l'aéronef arrive sur place.

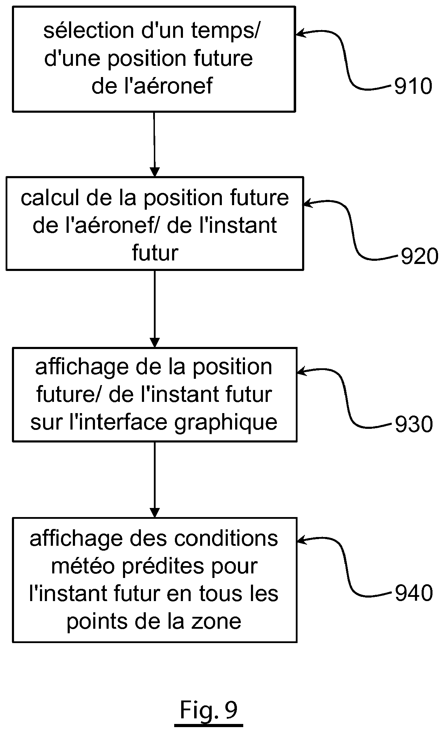

Le système de visualisation des risques météorologiques selon l'invention peut en outre opérer selon un second mode de fonctionnement, complémentaire du premier, comme décrit ci-après en relation avec la Fig. 9.

Ce second mode de fonctionnement permet au pilote de visualiser les conditions météorologiques dans une zone déterminée, relatives à un instant $t$ qu'il peut faire librement varier dans un intervalle $[t_0 - T', t_0 + T]$, par exemple en déplaçant un curseur sur un axe temporel de l'interface graphique. On pourra choisir $T' = 0$, la représentation des conditions météorologiques passées ne présentant généralement que peu d'intérêt pour le pilote. En déplaçant le curseur, le pilote sélectionne un instant $t$ de l'intervalle en question. La situation météorologique prédite dans la zone pour le temps $t$ est alors affichée ainsi que, concomitamment, le symbole d'armateur (*ownship symbol*) dans la nouvelle position de l'aéronef prévue pour le temps $t$. Inversement, lorsque l'itinéraire est affiché dans la zone, le pilote peut déplacer l'aéronef le long de cet itinéraire. Le déplacement de l'aéronef le long de l'itinéraire entraîne corrélativement un déplacement du curseur sur l'axe temporel, un instant $t$ sur l'axe temporel étant associé de manière biunivoque à la position de l'aéronef sur l'itinéraire à cet instant.

Plus précisément, à l'étape 910, un temps $t \in [t_0, t_0 + T]$ est sélectionné ou, inversement, une position future de l'aéronef le long de son itinéraire est sélectionnée.

A l'étape 920, le processeur 310 calcule, à partir de la position actuelle $A(t_0)$ de l'aéronef et de ses paramètres de navigation, la position future $A(t)$ de l'aéronef au temps $t$ sélectionné. Inversement si une position future $A'$ est sélectionnée le long de l'itinéraire de l'aéronef, le processeur 310 calcule à partir des positions $A(t_0)$, $A'$ et des paramètres de navigation le temps $t$ nécessaire à l'aéronef pour rallier le point $A'$.

A l'étape 930, le processeur affiche le symbole de l'aéronef à la position $A' = A(t)$ et le curseur à la position $t$ sur l'axe temporel.

A l'étape 940, le processeur extrait de la mémoire de masse les informations météorologiques relatives au temps $t$ pour tous les points de la zone concernée et affiche les conditions météorologiques correspondant à cet instant.

Un mode de balayage automatique peut être également prévu. Selon ce mode, on balaie en boucle l'instant $t$ entre les bornes $t_0$ et $t_0 + T$, et on itère les étapes 910 à 940.

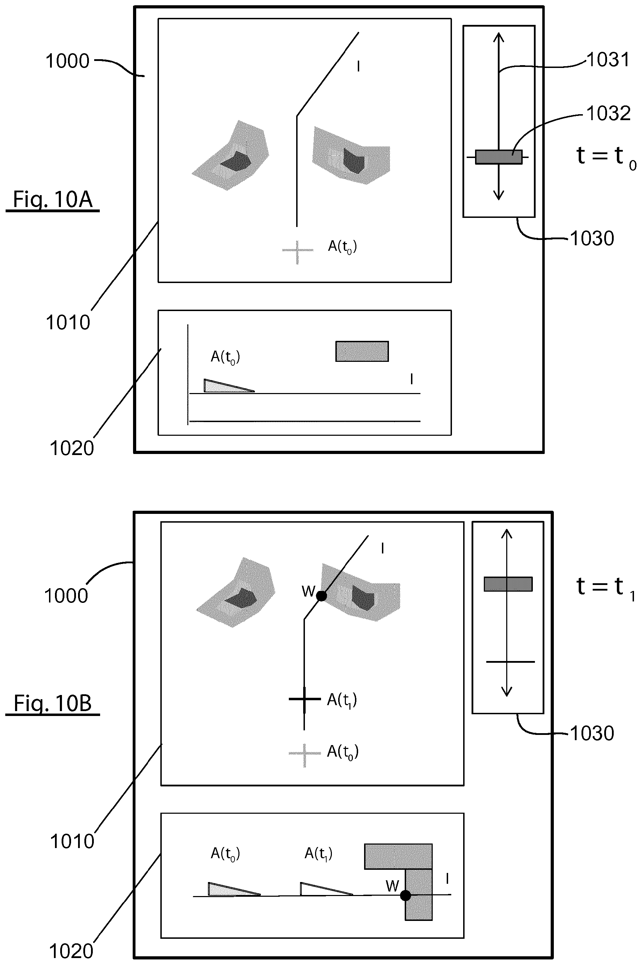

La Fig. 10A représente une fenêtre 1000 de l'interface graphique affichant les conditions météorologiques actuelles dans une zone à l'avant de l'aéronef. Plus précisément, la fenêtre comprend une première partie 1010 dans laquelle sont affichées ces conditions météorologiques selon une coupe horizontale contenant l'aéronef et une seconde partie 1020 affichant ces conditions météorologiques selon une coupe verticale le long de l'itinéraire prévu. La position actuelle de l'aéronef est désignée par $A(t_0)$ et l'itinéraire est désigné par $I$. La fenêtre 1000 comprend en outre une troisième partie 1030 dans laquelle est affiché un axe temporel 1031, avantageusement gradué en temps, le long duquel un curseur 1032 peut être déplacé (par exemple de manière tactile ou à l'aide d'une souris). L'axe temporel est ici vertical mais on comprendra qu'il pourrait être disposé horizontalement. Alternativement, le pilote peut déplacer, par les mêmes moyens que précédemment (écran tactile ou souris), l'aéronef le long de sa trajectoire, que ce soit dans la coupe horizontale 1010 ou dans la coupe verticale 1020. Le déplacement du curseur 1032 le long de l'axe temporel 1031 entraîne le déplacement de l'aéronef le long de l'itinéraire $I$ et réciproquement. On remarque sur la figure que, à la situation observée ou prédite au temps $t_0$, l'itinéraire $I$ ne croise pas de formation orageuse.

La Fig. 10B représente la même fenêtre 1000 en un instant $t_1$ postérieur de 30mns à l'instant $t_0$. On remarque que la position du curseur et celle de l'aéronef ont varié en conséquence. On a désigné ici par $A(t_0)$ la position de l'aéronef à l'instant $t_0$ et par $A(t_1)$ la position de l'aéronef à l'instant $t_1$. Ainsi, en déplaçant l'aéronef, ou de manière équivalente, en déplaçant le curseur sur l'axe temporel, on peut vérifier la présence ou non de risques météorologiques le long de l'itinéraire. Dans le cas présent, on remarque que selon la situation prédite pour le temps $t_1$, l'itinéraire croise une situation orageuse en $W$. Toutefois, pour s'assurer de la pertinence du risque en $W$, le pilote peut poursuivre le déplacement du symbole d'aéronef jusqu'en ce point.

Ce second mode de fonctionnement peut compléter avantageusement le premier mode. En effet, à l'aide du premier mode, le pilote peut rapidement décider d'un itinéraire alternatif pour éviter un risque météorologique, cet évitement pouvant être horizontal et/ou vertical. Il peut ensuite déplacer le symbole de l'aéronef le long de l'itinéraire en question, selon le second mode, pour s'assurer qu'en aucun point de sa trajectoire l'aéronef n'est confronté avec un risque météorologique important.

## Revendications

1.  Système de visualisation de risques météorologiques dans une zone prédéterminée, ledit système étant adapté à être embarqué à bord d'un aéronef et comprenant :

    - des moyens de communication (330) pour recevoir des informations météorologiques en chaque point de ladite zone ;
    - un processeur (310) pour déterminer, pour chaque point de ladite zone, à partir de la position actuelle de l'aéronef et de paramètres de navigation, un instant futur auquel l'aéronef atteindrait ce point;

    un système expert (340) utilisant un réseau bayésien représentant un modèle probabiliste pour estimer, en chaque point de ladite zone, à partir desdites informations météorologiques, un risque météorologique en ce point au dit instant futur, ledit système étant **caractérisé en ce que**, le risque météorologique étant constitué par la présence d'un phénomène météorologique délimité par une frontière, le réseau bayésien estime le risque météorologique en un point *P* de ladite zone et à l'instant futur, $t_1$, auquel l'aéronef atteindrait ce point, à partir au moins des informations météorologiques prédites dans ladite zone pour l'instant $t_1$, de la distance *d* séparant la position actuelle *A* de l'aéronef et le point *P*, de la distance entre la droite (*AP*) et la frontière du phénomène météorologique, et de l'ancienneté desdites informations météorologiques prédites ; ledit système comprenant en outre une interface graphique (360) pour représenter, en chaque point de ladite zone, le risque météorologique ainsi estimé par le système expert.

**2.** Système de visualisation selon la revendication 1, **caractérisé en ce que** la zone prédéterminée est un couloir autour d'un itinéraire préalablement déterminé de l'aéronef.

**3.** Système de visualisation selon la revendication 1, **caractérisé en ce que** la zone prédéterminée est un secteur angulaire dont le sommet est situé à la position actuelle de l'aéronef.

**4.** Système de visualisation selon l'une des revendications 1 à 3, **caractérisé en ce que** les informations météorologiques sont relatives à une situation observée en un instant actuel et/ou à des situations prédites pour une pluralité d'instants futurs, lesdites informations météorologiques étant en outre stockées dans une base de données (350).

**5.** Système de visualisation selon la revendication 1, **caractérisé en ce que** le réseau bayésien prend également en compte le degré de confiance des informations météorologiques lorsque celles-ci sont prédites.

**6.** Système de visualisation selon la revendication 5, **caractérisé en ce qu'**il comprend des moyens de sélection d'un instant dans une plage temporelle prédéterminée et que, dans un second mode de fonctionnement, le processeur est adapté à calculer une position de l'aéronef correspondant à un instant sélectionné dans cette plage et, inversement à calculer un temps pour une position sélectionnée de l'aéronef, le processeur étant en outre adapté à afficher sur l'interface graphique la position calculée ou sélectionnée de l'aéronef ainsi que des conditions météorologiques au temps sélectionné ou calculé.

**7.** Méthode de visualisation de risques météorologiques encourus par un aéronef, à l'intérieur d'une zone prédéterminée, ladite méthode comprenant :

　　- une étape de réception (710) des informations météorologiques en chaque point de ladite zone ;
　　- une étape de calcul (720), pour chaque point de ladite zone, à partir de la position actuelle de l'aéronef et desdits paramètres de navigation, d'un instant futur auquel le véhicule atteindrait ce point;
　　- une étape d'estimation (730) à l'aide d'un système expert utilisant un réseau bayésien représentant un modèle probabiliste pour estimer, en chaque point de la zone considérée, à partir desdites informations météorologiques, un risque météorologique en ce point audit instant futur, le risque météorologique étant constitué par la présence d'un phénomène météorologique délimité par une frontière, le réseau bayésien estimant le risque météorologique en un point P de ladite zone et à l'instant futur, $t_1$, auquel l'aéronef atteindrait ce point, à partir au moins des informations météorologiques prédites dans ladite zone pour l'instant $t_1$, de la distance *d* séparant la position actuelle *A* de l'aéronef et le point *P*, de la distance entre la droite (*AP*) et la frontière du phénomène météorologique, et de l'ancienneté desdites informations météorologiques prédites;
　　- une étape d'affichage (740), en chaque point de la zone considérée, du risque météorologique ainsi estimé à l'étape précédente.

**8.** Méthode de visualisation selon la revendication 7, **caractérisée en ce que** la zone prédéterminée est un couloir autour d'un itinéraire préalablement déterminé de l'aéronef.

**9.** Méthode de visualisation selon la revendication 7, **caractérisée en ce que** la zone prédéterminée est un secteur angulaire dont le sommet est situé à la position actuelle de l'aéronef.

**10.** Méthode de visualisation selon l'une des revendications 7 à 9, **caractérisée en ce que** les informations météorologiques sont relatives à une situation observée en un instant actuel et/ou à des situations prédites pour une pluralité d'instants futurs.

**Patentansprüche**

**1.** System zur Visualisierung von meteorologischen Risiken in einer vorbestimmten Zone, wobei das System dazu ausgelegt ist, an Bord eines Luftfahrzeugs verladen zu sein, und folgendes umfasst:

　　- Kommunikationsmittel (330) zum Empfangen von meteorologischen Informationen an jedem Punkt der Zone;
　　- einen Prozessor (310) zur Bestimmung eines zukünftigen Zeitpunkts für jeden Punkt der Zone, an dem das Luftfahrzeug diesen Punkt erreichen würde, ausgehend von der aktuellen Position des Luftfahrzeugs und von Navigationsparametern;

ein Expertensystem (340), das ein Bayes-Netz verwendet, das ein Wahrscheinlichkeitsmodell repräsentiert, um an jedem Punkt der Zone ausgehend von den meteorologischen Informationen ein meteorologisches Risiko an diesem Punkt an dem zukünftigen Zeitpunkt abzuschätzen, wobei das System **dadurch gekennzeichnet ist, dass** das meteorologische Risiko durch das Vorhandensein eines meteorologischen Phänomens gebildet ist, welches durch eine Grenze begrenzt ist, wobei das Bayes-Netz das meteorologische Risiko an einem Punkt $P$ der Zone und an dem zukünftigen Zeitpunkt $t_1$, an dem das Luftfahrzeug diesen Punkt erreichen würde, wenigstens ausgehend von den vorhergesagten meteorologischen Informationen in der Zone für den Zeitpunkt $t_1$, dem Abstand $d$, der die aktuelle Position A des Luftfahrzeugs und den Punkt $P$ trennt, dem Abstand zwischen der Geraden ($AP$) und der Grenze des meteorologischen Phänomens und dem Alter der vorhergesagten meteorologischen Informationen abschätzt;

wobei das System ferner eine grafische Schnittstelle (360) umfasst, um an jedem Punkt der Zone das derart durch das Expertensystem abgeschätzte meteorologische Risiko darzustellen.

2. System zur Visualisierung nach Anspruch 1, **dadurch gekennzeichnet, dass** die vorbestimmte Zone ein Korridor um einen zuvor bestimmten Weg des Luftfahrzeugs ist.

3. System zur Visualisierung nach Anspruch 1, **dadurch gekennzeichnet, dass** die vorbestimmte Zone ein Winkelsektor ist, dessen Spitze an der aktuellen Position des Luftfahrzeugs liegt.

4. System zur Visualisierung nach einem der Ansprüche 1 bis 3, **dadurch gekennzeichnet, dass** sich die meteorologischen Informationen auf eine zu einem aktuellen Zeitpunkt beobachtete Situation beziehen, und/oder auf vorhergesagte Situationen für eine Mehrzahl von zukünftigen Zeitpunkten, wobei die meteorologischen Informationen ferner in einer Datenbank (350) gespeichert sind.

5. System zur Visualisierung nach Anspruch 1, **dadurch gekennzeichnet, dass** das Bayes-Netz auch den Zuverlässigkeitsgrad der meteorologischen Informationen berücksichtigt, wenn diese vorhergesagt werden.

6. System zur Visualisierung nach Anspruch 5, **dadurch gekennzeichnet**, das es Mittel zur Auswahl eines Zeitpunkts aus einem vorbestimmten Zeitraum umfasst, und dass der Prozessor in einem zweiten Betriebsmodus dazu ausgelegt ist, eine Position des Luftfahrzeugs entsprechend einem ausgewählten Zeitpunkt in diesem Raum zu berechnen, und umgekehrt eine Zeit für eine ausgewählte Position des Luftfahrzeugs zu berechnen, wobei der Prozessor ferner dazu ausgelegt ist, auf der graphischen Schnittstelle die berechnete oder ausgewählte Position des Luftfahrzeugs sowie meteorologische Bedingungen zum ausgewählten oder berechneten Zeitpunkt anzuzeigen.

7. Verfahren zur Visualisierung von meteorologischen Risiken, denen ein Luftfahrzeug ausgesetzt ist, innerhalb einer vorbestimmten Zone, wobei das Verfahren umfasst:

   - einen Schritt des Empfangens (710) von meteorologischen Informationen an jedem Punkt der Zone;
   - einen Schritt des Berechnens (720) eines zukünftigen Zeitpunkts für jeden Punkt der Zone, an dem das Luftfahrzeug diesen Punkt erreichen würde, ausgehend von der aktuellen Position des Luftfahrzeugs und den Navigationsparametern;
   - einen Schritt des Abschätzens (730) mit Hilfe eines Expertensystems, das ein Bayes-Netz verwendet, das ein Wahrscheinlichkeitsmodell repräsentiert, um an jedem Punkt der betrachteten Zone ausgehend von den meteorologischen Informationen ein meteorologisches Risiko an diesem Punkt zu dem zukünftigen Zeitpunkt abzuschätzen, wobei das meteorologische Risiko durch das Vorhandensein eines meteorologischen Phänomens gebildet ist, das durch eine Grenze begrenzt ist, wobei das Bayes-Netz das meteorologische Risiko an einem Punkt $P$ der Zone und an dem zukünftigen Zeitpunkt $t_1$, an dem das Luftfahrzeug diesen Punkt erreichen würde, wenigstens ausgehend von den meteorologischen Informationen abschätzt, die in der Zone für den Zeitpunkt $t_1$ vorhergesagt sind, dem Abstand $d$, der die aktuelle Position A des Luftfahrzeugs und den Punkt $P$ trennt, dem Abstand zwischen der Geraden ($AP$) und der Grenze des meteorologischen Phänomens, und dem Alter der vorhergesagten meteorologischen Informationen;
   - einen Schritt des Anzeigens (740) des derart im vorhergehenden Schritt abgeschätzten meteorologischen Risikos an jedem Punkt der betrachteten Zone.

8. Verfahren zur Visualisierung nach Anspruch 7, **dadurch gekennzeichnet, dass** die vorbestimmte Zone ein Korridor um einen zuvor bestimmten Weg des Luftfahrzeugs ist.

9. Verfahren zur Visualisierung nach Anspruch 7, **dadurch gekennzeichnet, dass** die vorbestimmte Zone ein Winkelsektor ist, dessen Spitze an der aktuellen Position des Luftfahrzeugs liegt.

10. Verfahren zur Visualisierung nach einem der Ansprüche 7 bis 9, **dadurch gekennzeichnet, dass** sich die meteorologischen Informationen auf eine zu einem aktuellen Zeitpunkt beobachtete Situation beziehen, und/oder auf vorhergesagte Situationen für eine Mehrzahl von zukünftigen Zeitpunkten.

**Claims**

1. A system for viewing weather hazards in a predetermined region, said system being adapted to be onboard a aircraft and comprising:

   - communication means (330) for receiving weather information at each point of said region;
   - a processor (310) for determining, for each point of said region, from the current position of the vehicle and said navigation parameters, a future instant at which the vehicle would reach this point;
   - an expert system (340) using a Bayesian network representing a probabilistic model for estimating, at each point of said region, from said weather information, a weather hazard at that point at said future instant, said system being **characterized in that**, the weather hazard consisting of the presence of a weather event bounded by a boundary, the Bayesian network estimates the weather hazard at a point $P$ of said region and at the future instant, $t_1$, at which the aircraft would reach this point, from at least the forecast weather information in said region for the instant $t_1$, the distance $d$ separating the current position $A$ of the aircraft and the point $P$, the distance between the straight line ($AP$) and the boundary of the weather event, and the age of said forecast weather information, said system further comprising
   - a graphic interface (360) for representing, at each point of said region, the weather hazard thus estimated by the expert system.

2. The viewing system according to claim 1, **characterised in that** the predetermined region is a corridor around a previously determined flight route of the vehicle.

3. The viewing system according to claim 1, **characterised in that** the predetermined region is an angular sector the vertex of which is located at the current position of the vehicle.

4. The viewing system according to one of claims 1 to 3, **characterised in that** the weather information is relating to a nowcast situation at a current instant and/or to forecast situations for a plurality of future instants, said weather information being further stored in a database (350).

5. The viewing system according to claim 1, **characterised in that** the Bayesian network also takes into account the confidence level of the weather information when it is forecast.

6. The viewing system according to claim 5, **characterised in that** it comprises means for selecting an instant in a predetermined time range and **in that**, in a second operating mode, the processor is adapted to calculate a position of the aircraft corresponding to a selected instant in this range and, conversely, to calculate a time for a selected position of the aircraft, the processor being further adapted to display on the graphic interface the calculated or selected position of the aircraft as well as the weather conditions at the selected or calculated time.

7. A method for viewing weather hazards to which an aircraft is likely to be exposed, within a predetermined region, said method comprising:

   - a step of receiving (710) weather information at each point of said region;
   - a step of calculating (720), for each point of said region, from the current position of the aircraft and said navigation parameters, a future instant at which the aircraft would reach this point;
   - a step of estimating (730) using an expert system utilizing the Bayesian network representing a probabilistic model for estimating, at each point of the considered region, from said weather information, a weather hazard at that point at said future instant, the weather hazard consisting of the presence of a weather event bounded by a boundary, the Bayesian network estimating the weather hazard at a point $P$ of said region and at the future instant, $t_1$, at which the aircraft would reach this point, from at least the forecast weather information in said region for the instant $t_1$, the distance $d$ separating the current position $A$ of the aircraft and the point $P$, the distance between the straight line ($AP$) and the boundary of the weather event, and the age of said forecast weather information;
   - a step of displaying (740), at each point of the considered region, the weather hazard thus estimated at the preceding step.

8. The viewing method according to claim 7, **characterised in that** the predetermined region is a corridor around a previously determined flight route of the vehicle.

9. The viewing method according to claim 7, **characterised in that** the predetermined region is an angular sector the vertex of which is located at the current position of the vehicle.

10. The viewing method according to one of claims of 7 to 9, **characterised in that** the weather information is relating to a nowcast situation at a current instant and/or to forecast situations for a plurality of future instants.

Fig. 1A

Fig. 1B

$t = t_0$

$t = t_1$

Fig. 2A

Fig. 2B

$t = t_0$

$t = t_1$

<u>Fig. 3</u>

Fig. 4A

Fig. 4B

$P(v|\delta)$

$P(v|d)$

$P(v|\tau_1)$

## Fig. 5A

$t = t_1$

## Fig. 5B

$d, \delta, \tau$

situation prédite
pour t=t$_1$

A

A$_0$

<u>Fig. 5C</u>

situation réelle
en t=t$_1$

A

A$_0$

<u>Fig. 5D</u>

$$P(v|\delta t) \qquad P(v|\delta) \qquad P(v|\tau_0)$$

Fig. 6A

$t = t_0$

Fig. 6B

réception des
informations
météorologiques
~710

calcul de
$t_1 = t_0 + d / V$
~720

estimation du risque météo
au point $P$ pour $t=t_1$
~730

affichage de la carte des
risque météo
~740

Fig. 7

Fig. 8

```
┌─────────────────────────┐
│   sélection d'un temps/  │
│   d'une position future  │ ◄──┐
│       de l'aéronef       │    └── 910
└─────────────────────────┘
             │
             ▼
┌─────────────────────────┐
│  calcul de la position future │
│   de l'aéronef/ de l'instant  │ ◄──┐
│           futur          │    └── 920
└─────────────────────────┘
             │
             ▼
┌─────────────────────────┐
│   affichage de la position │
│   future/ de l'instant futur │ ◄──┐
│   sur l'interface graphique │  └── 930
└─────────────────────────┘
             │
             ▼
┌─────────────────────────┐
│  affichage des conditions │
│   météo prédites pour    │ ◄──┐
│  l'instant futur en tous les │ └── 940
│     points de la zone    │
└─────────────────────────┘
```

Fig. 9

Fig. 10A

Fig. 10B

**EP 2 955 481 B1**

## RÉFÉRENCES CITÉES DANS LA DESCRIPTION

**Documents brevets cités dans la description**

- US 7109913 B
- WO 2013130897 A

- US 6577947 B1